Europäisches Patentamt

European Patent Office

Office européen des brevets

(11) Numéro de publication: **0 427 657 A1**

# (12) DEMANDE DE BREVET EUROPEEN

(21) Numéro de dépôt: 90480168.5

(22) Date de dépôt: 26.10.90

(51) Int. Cl.5: **B60R 22/44**

(30) Priorité: 09.11.89 FR 8915008

(43) Date de publication de la demande:
15.05.91 Bulletin 91/20

(84) Etats contractants désignés:
AT BE CH DE DK ES FR GB GR IT LI LU NL SE

(71) Demandeur: Tressaud, André
Mas de la Cyprière
F-83440 Callian(FR)

(72) Inventeur: Tressaud, André
Mas de la Cyprière
F-83440 Callian(FR)

(74) Mandataire: Hautier, Jean-Louis
Cabinet Hautier Office Méditerranéen de
Brevets d'Invention et de Marques 24 rue
Masséna
F-06000 Nice(FR)

(54) Appareil qui neutralise la tension de rappel des ceintures de sécurité à enrouleur automatique.

(57) L'invention a pour objet un appareil qui neutralise la tension de rappel des ceintures de sécurité à enrouleur automatique. Il comprend : corps principal 1 supportant un axe 2 muni d'un disque 5 ayant une encoche 6. Autour de l'axe pivote un tambour 11, antidérapant, mis en rotation par la ceinture, le rouleau 12 l'obligeant à frotter légèrement dessus. Si sa vitesse de rotation est faible, les cliquets 7 ou 8, sous l'effet de la pesanteur, tombent dans l'encoche 6, entraînent l'axe 2 qui, grâce à deux méplats 3, permet à l'étrier 14 de descendre et, de par son articulation excentrée 27, coince la ceinture l'empêchant de se rebobiner. Si on tire sur la ceinture, l'étrier remonte, un contrepoids remet l'axe dans sa position initiale, et la ceinture peut se rebobiner sans gêne. En cas de décélération brutale, un contrepoids libère la ceinture.

FIG.3

EP 0 427 657 A1

## APPAREIL QUI NEUTRALISE LA TENSION DE RAPPEL DES CEINTURES DE SÉCURITÉ À ENROULEUR AUTOMATIQUE

La présente invention concerne un appareil qui neutralise la tension de rappel des ceintures de sécurité à enrouleur automatique.

Il est connu que la tension des ceintures de sécurité gêne le conducteur et devient fatigante sur un long parcours, ce qui entraîne certains à ne pas l'employer.

Des appareils ont été brevetés, souvent très compliqués, ou faisant appel à des systèmes électriques donc très onéreux. D'autres très simples comme les pinces, clips, boutons-pression obligent le conducteur à se tourner pour enclencher le système, ce qui est difficile pour certains conducteurs âgés et périlleux si l'opération se fait en roulant. De plus, le mou laissé à la ceinture peut être, s'il est excessif, dangereux en cas d'accident. Beaucoup de systèmes gênent le rembobinage des ceintures.

- US-A-3,486,792 :

Ce brevet décrit une fermeture linéaire pour ceinture de sécurité possédant un système d'accrochage à ressorts destiné à accrocher la partie allongée de la ceinture au véhicule. Le système d'accrochage est mis en fonction par un rouleau sensible au mouvement autour duquel la ceinture est entraînée et un embrayage nouveau qui libère le système d'accrochage dans une position d'accrochage de la ceinture, lorsque la ceinture est légèrement tirée, après qu'une portion choisie de ceinture ait été tirée hors de la fermeture, puis en partie rétractée. Ce brevet n'utilise pas de cliquets qui tombent sous l'effet de la pesanteur.

- US-A-3,206,137 :

Ce brevet décrit un appareil pour manipuler une ceinture de sécurité comprenant une ceinture repliée dans un rouleau et pouvant être dépliée dudit rouleau, des moyens de remise en place en rapport avec ladite ceinture pour replier ladite ceinture dans ledit rouleau lorsque ladite ceinture est dépliée, un membre rotatoire, des moyens d'accroître la rapidité liés audit rouleau et audit membre pour faire tourner ledit membre en liaison avec la rotation dudit rouleau, à une rapidité angulaire beaucoup plus grande que ledit rouleau, de premiers moyens d'accrochage comportant une première partie et une seconde partie en association, ladite seconde partie étant entraînée par la rotation dudit membre à une rapidité angulaire équivalente à celle dudit membre et qui suit la force centrifuge exercée sur ladite seconde partie par la rotation dudit membre, produite par le déroulement de ladite ceinture de sécurité à une vitesse plus grande qu'une échelle prévue, de façon à provoquer les dites première et deuxième parties à entrer dans les moyens d'accrochage pour empêcher un déroulement plus long de la ceinture et des moyens secondaires de sécurité comprenant une troisième partie associée à une quatrième partie, ladite quatrième partie étant entraînée par la rotation dudit membre à l'angle de rapidité dudit membre, les dites troisième et quatrième parties étant associées aux moyens d'accrochage et de restauration pour empêcher l'enroulement de ladite ceinture, et la quatrième partie étant associée à la force centrifuge exercée sur ladite quatrième partie, produite par la rotation dudit membre par l'enroulement de ladite ceinture, provoquant les dites troisième et quatrième parties à se désengager des moyens d'accrochage et permettre aux dits moyens de restauration de ré-enrouler ladite ceinture de sécurité.

Ce brevet décrit en fait un enrouleur de sécurité pour ceinture. Il n'enlève pas le rappel de la ceinture qui vient en contact constant avec le corps à maintenir.

EP 0056.894 :

Appareil pour bloquer le ruban d'une ceinture de sécurité en cas d'urgence. Ce brevet décrit des moyens d'accrochage pour bloquer de façon sélective le ruban d'une ceinture de sécurité pour éviter tout mouvement relatif aux moyens d'accrochage et des moyens associés à l'inertie pour faire fonctionner les moyens d'accrochage indépendamment des mouvements du ruban vers une position d'arrêt du ruban en réponse à des changements dans l'inertie du véhicule, les moyens d'accrochage comprenant un membre d'accrochage en forme de clavette ayant une grande force, un matériau de friction résilient et à haut coefficient de friction est prévu pour l'engagement des parties du ruban qui doivent être accrochées, des moyens de décentrement pour décentrer normalement le membre en forme de clavette vers une position d'accrochage du ruban, des moyens de retenue et de déroulement pour retenir normalement le ruban immobile par son décentrement et des moyens de déclenchement manoeuvrés en réponse aux changements de l'inertie du véhicule pour relâcher les moyens de retenue et permettre le mouvement de la clavette en décentrement jusqu'à une position d'accrochage du ruban. L'inertie du véhicule activant les moyens d'accrochage, ceux-ci peuvent être employés comme le seul appareil contrôlant la ceinture de sécurité ou en association avec une fermeture d'urgence pour produire un système de double blocage.

Ce brevet ne décrit pas de cliquet ou de moyen équivalent, de méplat, sur l'axe du tambour et d'étrier mobile.

- CH 655.281 :

Un rouleau de guidage de la ceinture, disposé perpendiculairement à ladite ceinture, est relié à une roue, au moins à l'une de ses extrémités. Cette roue comporte, à sa périphérie, des dents de blocage qui viennent en prise avec un cliquet de retenue de telle manière que le rouleau de guidage de la ceinture peut tourner librement lorsque l'on tire sur la ceinture mais qu'il se trouve bloqué en sens inverse. Le rouleau de guidage de la ceinture a une section excentrique, en forme d'ellipse par exemple. Un étrier de serrage, dont les extrémités sont logées dans les parois latérales, est plaqué, jusqu'à venir en contact avec une butée contre le rouleau de guidage de la ceinture ou contre la ceinture qui se trouve sur celui-ci. Lorsqu'on tire sur la ceinture, celle-ci ne se déroule pas régulièrement mais, en raison de la forme en d'ellipse du rouleau de guidage de la ceinture, avec des à-coups de retenue en arrière. Si peu après un à-coup, on lache, on libère la ceinture, le système d'enroulement automatique ne rappelle la ceinture en arrière que jusqu'à ce que la bosse principale de la périphérie en forme d'ellipse du rouleau vienne pincer la ceinture entre le rouleau et l'étrier de serrage.

L'appareil selon l'invention supprime ces inconvénients. Il permet un blocage de la ceinture dans n'importe quelle position, sans entraver le rappel automatique (aucune pression ne subsiste sur la ceinture en dehors de la position blocage), grâce à un système de cliquets montés sur tambour, entraînant, à partir d'une certaine vitesse de rotation, un axe qui libère un étrier coinçant la ceinture à la position désirée. Le réglage peut être fait ou modifié, à tous moments même en roulant.

On peut adjoindre à l'appareil un levier avec contre-poids, qui, sous l'effet d'un coup de frein brutal ou d'un choc, libère le système de blocage et resserre aussitôt la ceinture.

Les dessins ci-joints sont donnés à titre d'exemples indicatifs et non limitatifs. Ils représentent un mode de réalisation préféré selon l'invention. Ils permettront de comprendre aisément l'invention.

Le dessin annexé est une vue du dispositif :

figure 1 : vue côté droit
figure 2 : vue côté gauche
figure 3 : système repos
figure 4 : en action

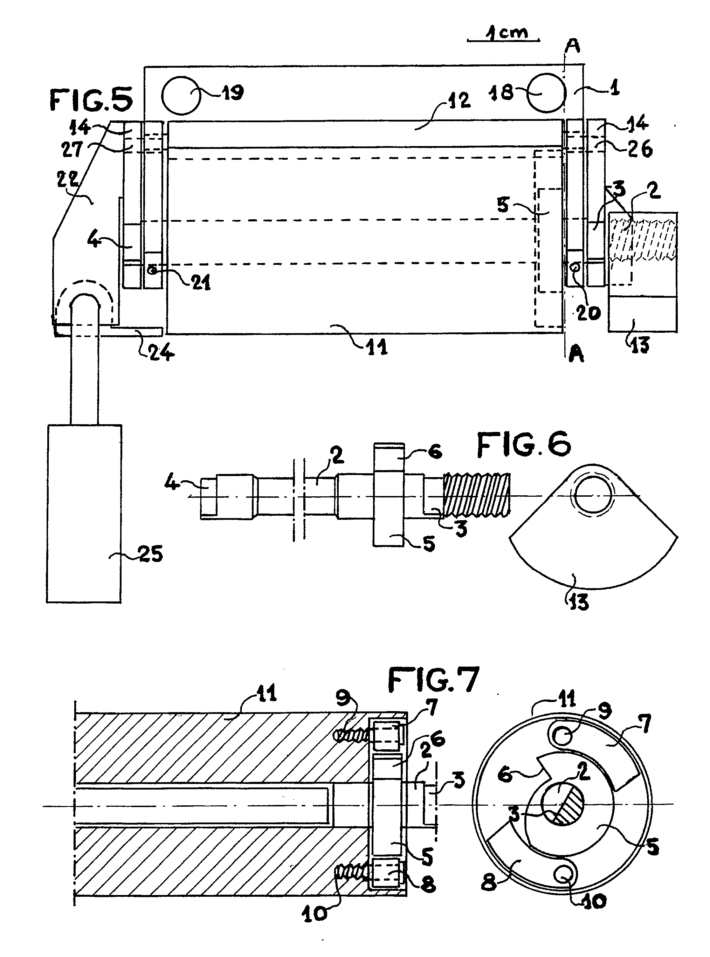

figure 5 : vue de face
figure 6 : détail de l'arbre 2 et du contrepoids 13 à l'extrême droite
figure 7 : vue du tambour côté droit, de face et de profil.

Tel qu'il est représenté il comprend : un corps principal 1, supportant un axe 2, qui a un méplat 3 et 4, juste à sa sortie du corps principal et sur la moitié de son diamètre. Il est également muni d'un disque 5 comportant une encoche 6, dans laquelle, sous l'effet de la pesanteur, viennent s'enclencher les cliquets 7 et 8, lorsqu'ils se trouvent en face de l'encoche 6. Les cliquets 7 et 8 sont libres sur leurs axes 9 et 10, qui sont solidaires du tambour 11 ; celui-ci tourne librement sur l'axe 2. La ceinture frotte sur le tambour 11 grâce au petit rouleau 12. L'axe est muni, à une extrémité, d'un contrepoids 13, qui le ramène dès qu'il est libéré, dans la position initiale du dessin figure 3.

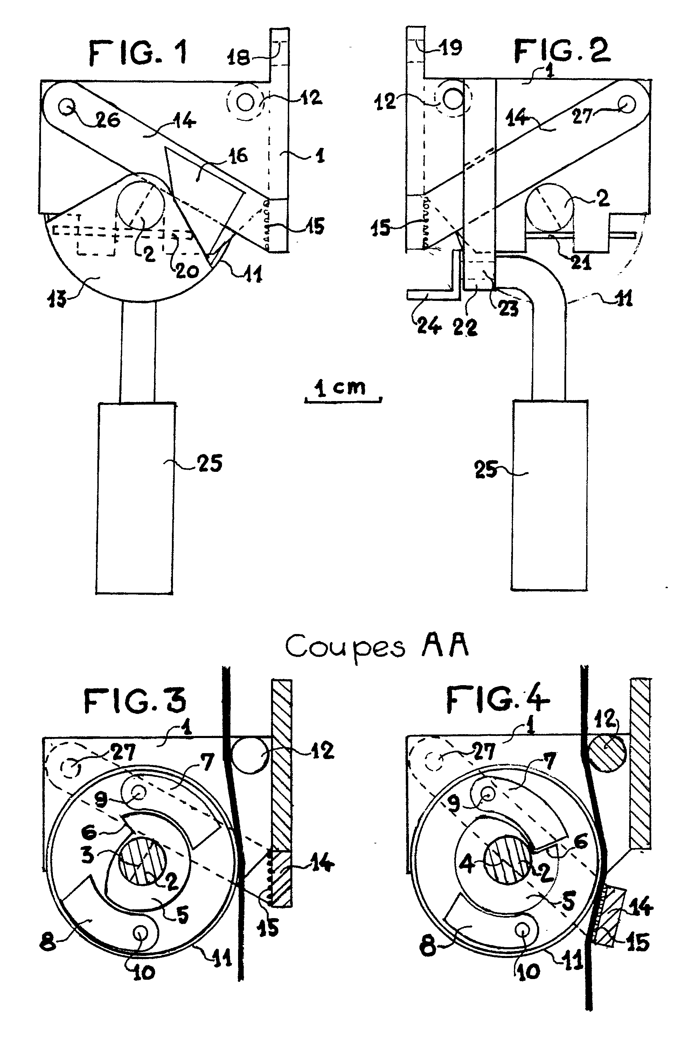

Lorsque la ceinture se déroule vers le haut, le tambour 11 tourne dans le sens où les cliquets ne peuvent pas s'enclencher, donc rien ne se passe. Si l'on revient en sens contraire, à vitesse lente, en laissant la ceinture se ré-enrouler automatiquement, les cliquets 7 et 8 vont basculer du fait de la pesanteur dans l'encoche 6, la force centrifuge étant presque nulle, entraînant ainsi l'axe 2 qui va tourner dans le sens des aiguilles d'une montre sur la figure 4. Les deux méplats des bouts de l'axe 2 vont libérer l'étrier 14 qui va descendre et appuyer sur la ceinture, du fait de son axe 26 et 27 de rotation excentré par rapport au tambour. La face 15 de l'étrier est recouverte d'une surface rugueuse (émeri 60, sable, ou autre ..) en raison du rappel automatique de la ceinture qui va entraîner davantage l'étrier vers le bas et coincer celle-ci entre le tambour 11 et l'étrier 14. La ceinture sera immobilisée dans cette position figure 4, donc, si le tambour a un diamètre de 2,5 centimètres, il y aura une immobilisation tous les 3,9 centimètres.

Si on tire un peu sur la ceinture, l'étrier 14 et l'axe 2 reviennent dans leur position initiale, grâce au contrepoids 13 monté sur l'axe 2 (contrepoids qui peut être remplacé par un ressort de rappel). Dans ce cas, il ne reste plus qu'à lâcher la ceinture pour qu'elle se rebobine rapidement, grâce à son système d'enrouleur. La vitesse de rotation rapide du tambour 11 empêche, du fait de la force centrifuge, les cliquets 7 et 8 de s'enclencher dans l'encoche 6. Il est donc nécessaire de régler la position de l'encoche 6 de façon que les cliquets ne s'enclenchent qu'à très faible vitesse de rotation.

Sur l'étrier, est également montée une butée 16, qui ne permet au contrepoids, qu'une course déterminée, correspondant aux positions hautes et basses de l'étrier.

On peut ajouter à l'appareil, un système de déblocage automatique lors d'un coup de frein puissant ou un choc, ceci augmentant la sécurité.

Il suffit de prévoir sur le bâti 1 une potence 22 qui maintient, par l'intermédiaire d'un axe 23, une petite palette 24 solidaire d'un contrepoids 25. Celui-ci, sous l'action d'une décélération importante, soulèvera l'étrier 14 libérant ainsi la ceinture, qui se resserrera par son rappel automatique.

Mode d'emploi : Il suffit une fois la ceinture bouclée, d'avancer le buste de quelques centimètres et de revenir tout doucement dans la position normale. Le rappel automatique se trouve bloqué. Pour libérer la ceinture : tirer quelques centimètres et la lâcher d'un coup. Elle se trouve libérée et se rebobine automatiquement.

Deux trous 18 et 19 permettent la fixation de l'appareil. Il peut être logé dans presque toutes les voitures, le long du montant des portes, derrière le cache en plastique où se trouve l'enrouleur de ceinture. Prévoir l'emplacement dans un endroit où son fonctionnement ne soit pas entravé. Percer deux trous bien perpendiculaires à la ceinture et visser l'appareil. Dégager les deux goupilles 20, 21 pour permettre au tambour 11 de sortir de son logement. Passer la ceinture entre celui-ci et le rouleau 12 et remonter le tambour dans son logement. Remettre les goupilles 20, 21.

Le même appareil peut se monter à droite ou à gauche du véhicule, sauf si le débrayage de sécurité est prévu, auquel cas, il faut un appareil droit symétrique du gauche.

Il peut être fabriqué entièrement en plastique moulé à l'exception des deux contrepoids et cliquets. De ce fait, son prix doit être modique. Il est également de petite taille, facile à monter et peut convenir à tous véhicules ayant des ceintures à rappel automatique. Il incitera les conducteurs à s'attacher, augmentant ainsi la sécurité. Les cardiaques n'auront plus besoin de dispenses et seront plus en sécurité, puisqu'ils pourront enfin s'attacher sans être gênés.

## REFERENCES

1. corps principal
2. arbre, axe
3. méplat
4. méplat
5. disque
6. encoche
7. cliquet
8. cliquet
9. axe
10. axe
11. tambour
12. petit rouleau de guidage
13. contrepoids
14. étrier
15. face de l'étrier
16. butée
18. trou
19. trou
20. goupille
21. goupille
22. potence
23. axe
24. petite palette
25. contrepoids
26. axe
27. axe

## Revendications

1. Appareil de blocage de la force de rappel des ceintures de

sécurité sur tous les véhicules, caractérisé par le fait qu'il comprend un bâti (1) supportant un axe (2) ayant un méplat de la moitié de son diamètre à chaque extrémité et muni d'un disque (5) avec une encoche (6) et un contrepoids (13) ; sur l'axe, pivote un tambour (11) avec des cliquets libres (7, 8) autour de leurs axes (9 et 10) ; un étrier basculant (14) avec une surface rugueuse (15), sur lequel se trouve une butée (16), limitant la rotation de l'axe (2) ; un rouleau de guidage (12) ; un axe (23) supportant une palette (24) agissant sur l'étrier à cause d'un contrepoids (25) soumis aux accélérations.

2. Appareil selon la revendication 1 caractérisé par le fait

que le tambour (11), n'entraîne l'axe (2) que dans un sens et pour une vitesse de rotation bien déterminée, dépendant de la position de l'encoche (6) par rapport au basculement des cliquets.

3. Appareil selon la revendication 2 caractérisé par le fait

que lorsque l'axe (2) est entraîné, il libère vers le bas un étrier (14), qui de par son axe de rotation, pivote de telle façon que sa surface rugueuse (15) est entraînée davantage vers le bas par la force de rebobinage de la ceinture et la coince sur le tambour.

4. Appareil selon la revendication 1 caractérisé par le fait

que l'axe et l'étrier sont rappelés dans leur position initiale par un contrepoids (13) lorsque l'on tire sur la ceinture.

5. Appareil selon la revendication 1 caractérisé par le fait

que le rouleau (12) guide la ceinture de façon qu'elle soit toujours en léger contact avec le tambour (11) à surface antidérapante, pour qu'il soit entraîné par celle-ci, mais n'apporte aucune gêne au rembobinage.

6. Appareil selon la revendication 1 caractérisé par le fait
qu'un contrepoids (25), de par son articulation, réagit aux décélérations en actionnant la palette (24) et vient pousser l'étrier vers le haut, libérant la ceinture et lui permettant de se retendre au maximum.

FIG. 1

FIG. 2

1 cm

Coupes AA

FIG.3

FIG.4

**FIG.5**

**FIG.6**

**FIG.7**

# RAPPORT DE RECHERCHE EUROPEENNE

Numéro de la demande

**EP 90 48 0168**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | CH-A-6 552 81  (ALFRED BECK, EBNAT-KAPPEL) <br> * page 2, colonne 2, lignes 20 - 59; figures * <br> – – – | 1 | B 60 <br> R 22/44 |
| D,A | US-A-3 206 137  (RUBEN SNYDERMAN) <br> * colonne 1, ligne 67 - colonne 2, ligne 4 * * colonne 3, lignes 36 - 56; figures 5, 6 * <br> – – – | 1 | |
| D,A | EP-A-0 056 894  (AMERICAN SAFETY EQUIPMENT) <br> * page 8, ligne 26 - page 9, ligne 9; figures 4, 5 * <br> – – – | 1 | |
| D,A | US-A-3 486 792  (R.W. STOFFEL) <br> * colonne 5, ligne 47 - colonne 6, ligne 41; figures 10-13 * <br> – – – – – | 1 | |

DOMAINES TECHNIQUES
RECHERCHES (Int. Cl.5)

B 60 R

Le présent rapport de recherche a été établi pour toutes les revendications

| Lieu de la recherche | Date d'achèvement de la recherche | Examinateur |
|---|---|---|
| La Haye | 14 février 91 | AREAL CALAMA A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

 

& : membre de la même famille, document correspondant